# EUROPÄISCHE PATENTSCHRIFT

(11) **EP 1 054 361 B1**
(45) Veröffentlichungstag und Bekanntmachung des Hinweises auf die Patenterteilung: **03.12.2003**
(21) Anmeldenummer: 00110169.0
(22) Anmeldetag: 15.05.2000
(51) Int. Cl.: G07D 5/00

(54) **Verfahren und Vorrichtung zur Erkennung der räumlichen Konfiguration von Münzen**
Method and apparatus for recognizing the spatial configuration of coins
Procédé et dispositif pour reconnaître la configuration spatiale des pièces de monnaie

(30) Priorität: 15.05.1999 DE 19922489
(43) Veröffentlichungstag der Anmeldung: 22.11.2000
(73) Patentinhaber: National Rejectors Inc. GmbH, 21614 Buxtehude (DE)
(72) Erfinder: Adameck, Markus, D-22419 Hamburg (DE); Cohrs, Ulrich, D-21640 Horneburg (DE); Meyer, Wilfried, D-21614 Buxtehude (DE); Eich, Manfred Prof. Dr., 21077 Hamburg (DE)
(74) Vertreter: Graalfs, Edo, Dipl.-Ing.

(56) Entgegenhaltungen:
- EP-A- 0 798 669
- DE-A- 2 306 187
- DE-A- 2 919 446
- FR-A- 2 380 602
- US-A- 5 236 074
- US-A- 5 346 049
- US-A- 5 576 825
- BESL P J: "ACTIVE, OPTICAL RANGE IMAGING SENSORS" MACHINE VISION AND APPLICATIONS, SPRINGER VERLAG, DE, Bd. 1, 1988, Seiten 127-152, XP000196923 ISSN: 0932-8092
- PATENT ABSTRACTS OF JAPAN vol. 1998, no. 13, 30. November 1998 (1998-11-30) & JP 10 222716 A (SANKYO SEIKI MFG CO LTD), 21. August 1998 (1998-08-21)
- PATENT ABSTRACTS OF JAPAN vol. 1999, no. 04, 30. April 1999 (1999-04-30) & JP 11 014557 A (OKI ELECTRIC IND CO LTD), 22. Januar 1999 (1999-01-22)
- PATENT ABSTRACTS OF JAPAN vol. 1997, no. 08, 29. August 1997 (1997-08-29) & JP 09 097363 A (OKI ELECTRIC IND CO LTD), 8. April 1997 (1997-04-08)
- PATENT ABSTRACTS OF JAPAN vol. 018, no. 466 (P-1794), 30. August 1994 (1994-08-30) & JP 06 150104 A (LAUREL BANK MACH CO LTD), 31. Mai 1994 (1994-05-31)
- PATENT ABSTRACTS OF JAPAN vol. 1996, no. 07, 31. Juli 1996 (1996-07-31) & JP 08 083335 A (COPAL CO LTD), 26. März 1996 (1996-03-26)

## Beschreibung

Die Erfindung bezieht sich auf ein Verfahren zur Erkennung der räumlichen Konfiguration von Münzen in einem Münzautomaten nach dem. Anspruch 1. Es können erkannt werden das Prägebild, die Dicke, der Durchmesser, der Umfang, die Oberflächenbeschaffenheit, die Breite und die Tiefe des Münzrandes usw.

Bei Münzautomaten, z. B. Münzprüfern, kommt es darauf an, echte Münzen zu diskriminieren. Hierzu ist eine Reihe von Verfahren bekannt geworden. Ein häufiges Unterscheidungskriterium ist das Münzmaterial, das mit verschiedenen Sonden ermittelt wird. Bei bekannten weltweiten Währungssystemen werden jedoch häufig gleiche oder fast gleiche Rohlinge benutzt. Die fertigen Münzen unterscheiden sich dann nur noch durch Dicke und Durchmesser. Ein wichtiges Unterscheidungskriterium ist jedoch das Prägebild der Münzen.

Aus GB 2 248 333 ist bekannt, eine Münze im Münzprüfer rotieren zu lassen und die Reflektion von Bildpunkten zu messen und mit abgespeicherten Sollwerten zu vergleichen. Nachteilig bei diesem Verfahren ist jedoch die Bandbreite der Reflektion bei Verschleiß und Verschmutzung. Ein weiteres Problem ergibt sich durch das Münzmaterial. So lassen sich Münzen, die nicht aus CuNi25 hergestellt sind, teilweise nicht oder nur schwer identifizieren. Auch verursacht die Programmierung des Münzprüfers mit diesem Meßverfahren einen hohen Aufwand zur Erzeugung der Soll-Bandbreiten, um für das Spektrum der Umlaufmünzen eine hohe Akzeptanz zu justieren.

Aus WO 97/44760 ist ein Verfahren bekannt geworden, bei dem das aufgeweitete Licht einer Laserdiode benutzt wird, um eine rollende Münze zu beleuchten. Zwei auf der gegenüberliegenden Seite der Münze angeordnete CCD-Zeilen detektieren dabei den Schatten, den die Münze wirft. Auf diese Weise werden Münzdicke und Münzdurchmesser gemessen.

Aus DE 43 40 733 A1 ist bekannt, Licht senkrecht auf eine Prägefläche zu werfen. In einem 2π-Raumwinkel um die beleuchtete Stelle sind optische Fasern angeordnet, welche das von der Prägefläche reflektierte Licht zu einem fotografischen Wandler leiten.

Aus DE 36 11 678 A1 ist bekannt, eine Münze mit einer LED zu beleuchten. Mit Hilfe eines fotoelektrischen Sensors wird die Lichtmenge ermittelt, welche von der Münze nicht abgeschattet wird. Das detektierte Licht ist mithin proportional zur Münzfläche.

Aus DE 35 26 378 A1 ist bekannt, eine zu prüfende Münze durch zwei Polymerwalzen zu führen, die piezoelektrische Eigenschaften haben. Entsprechend der Prägetiefe wird ein Stromsignal erzeugt, mit dem das Prägebild erkannt werden kann.

Die auf optischer Basis arbeitenden bekannten Verfahren liefern kein Prägebild der prüfenden Münze, sondern Schattenbilder, welche eine Fotografie oder eine Reflektionsmessung liefern. Mit Hilfe von derartigen Kameraaufnahmen ist es zwar möglich, eine Prägebildprüfung beim Herstellungsprozeß einer Münze durchzuführen, wo nicht zwischen Original und Fälschung unterschieden werden muß, sondern zwischen richtigem und fehlerhaftem Bild. Mit Hilfe einer Fotografie einer Münze ließe sich ein derartiges Verfahren "überlisten".

Aus OS 23 06 187 ist bekannt, die Oberfläche einer Münze durch ein optisches System berührungslos abzutasten. Hierzu gelangt die Münze durch einen kalibrierten Münzkanal in eine Anordnung von rotierenden Antriebsrollen. Das von der Lichtquelle ausgehende Licht wird als kleiner Punkt auf die rotierende Münze abgebildet. Der reflektierte Teil des Lichts wird auf eine Fotodiodenanordnung projiziert. Durch die auf der Münze befindlichen Erhebungen und Vertiefungen verschiebt sich der Leuchtfleck auf der Fotodiodenanordnung. Nachteilig an diesem Verfahren ist, dass der Antrieb der Münze und deren genaue Lagerung auf den Antriebsrollen vergleichsweise aufwendig ist. Ebenso treten bei dieser mechanischen Anordnung Verschleißprobleme auf, die durch das Einsetzen der Münze in die Antriebsrollen und das anschließende Entfernen aus der Antriebsrollenanordnung entstehen.

US-A-5 236 074 offenbart ein Verfahren zur Erkennung der räumlichen Konfiguration von Münzen in einem Münzautomaten mit folgenden Schritten, mit Hilfe einer Lichtquelle wird unter einem Winkel größer als 0° und kleiner als 90° in bezug auf die Erstreckung einer Prägefläche einer Münze Licht auf die Prägefläche projiziert, Münze und Licht werden relativ zueinander bewegt derart, daß sukzessiv ein Teil oder die gesamte Prägefläche beleuchtet wird, wobei die Münze an der Lichtquelle vorbeibewegt wird, die beleuchtete Münzflache wird mit einer Optik auf einen Bildempfänger abgebildet mit Hilfe einer Daten-und Bildverarbeitung werden die ermittelten Bilddaten verarbeitet.

Der Erfindung liegt die Aufgabe zugrunde, ein Verfahren zum Prüfen von Münzen anzugeben, mit dem räumliche Konfiguration von Münzen, wie Prägebilder und Münzprofile von sich bewegenden Münzen erkannt werden können.

Diese Aufgabe wird durch die Merkmale des Patentanspruchs 1 gelöst.

Bei dem erfindungsgemäßen Verfahren wird mit Hilfe einer geeigneten Lichtquelle mindestens ein zweidimensionales Lichtmuster aus Lichtlinien auf die Prägefläche einer Münze projiziert. Dies können ein oder mehrere Lichtlinien in der Scheimpfluganordnung sein oder ein sinusmoduliertes Gitter. Es sind aber auch andere Beleuchtungsstrukturen denkbar. Die Lichtebene, in der die Lichtlinie liegt, hat dabei einen Winkel größer als 0 und kleiner als 90° in bezug auf die Erstreckung der Prägefläche oder in bezug auf die Normale auf die Prägefläche einer Münze.

Als Lichtquelle kann ein Laser, eine Laserdiode oder eine Leuchtdiode verwendet werden mit einer entsprechenden Linienoptik. Es ist jedoch auch möglich, eine andere Lichtquelle zu verwenden, beispielsweise eine einfache Lampe, die die Struktur einer Maske auf der Münze abbildet.

Münze und Lichtlinie werden relativ zueinander bewegt derart, daß sukzessive ein Teil oder die gesamte Prägefläche beleuchtet wird. Hierbei ist die Lichtlinie stationär, und eine "Abtastung" der Prägefläche erfolgt während der Vorbeibewegung der Münze an der Lichtquelle. Vorzugsweise rollt die Münze an der Lichtquelle unter Einwirkung der Schwerkraft vorbei.

Mit Hilfe eines Bildempfängers wird der Verlauf der Lichtlinie aufgezeichnet. Der Bildempfänger kann gegenüber der Beleuchtungsebene geneigt sein. Der Bildempfänger kann eine Digitalkamera, einen CCD-Sensor oder einen CMOS-Sensor bzw. -Chip enthalten. Bei einer geeigneten Wiederholungsrate von z. B. 1.000 Bildern pro Sekunde kann auf diese Weise ein komplettes Präge- und Profilbild einer vorbeirollenden Münze aufgezeichnet werden. Erfindungswesentlich ist, daß das tatsächliche Höhenprofil gemessen wird, und zwar unabhängig vom Material der Münze und seiner Reflektivität. Es ist daher nicht möglich, das erfindungsgemäße Verfahren dadurch zu "überlisten", daß der Prüfvorrichtung ein Foto präsentiert wird.

Bevorzugt wird der Verlauf des Lichtmusters auf der Münze durch ein Linsenfeld abgebildet, das im wesentlichen parallel zur Beleuchtungsebene angeordnet ist. Alternativ ist dies durch eine einfache abbildende Optik entlang der optischen Achse möglich. Ein solches Linsenfeld mit einer Ausrichtung parallel zur die Lichtmuster erzeugenden Beleuchtungsebene liefert ein Bild der auf die Münze projizierten Linien. Alternativ wird dieses Bild auch durch das abbildende Objektiv geliefert. Das Höhenprofil auf der Münze bewirkt eine Abweichung von einem geraden Linienverlauf.

Bevorzugt wird als Linsenfeld ein 1:1 abbildendes GRIN-Feld (Gradienten-Index-Linsenfeld) verwendet. Ein solches GRIN-Feld erlaubt in kostengünstiger Art und Weise die Abbildung des Lichtmusters auf den Bildempfänger. GRIN-Felder besitzen aufgrund ihres Aufbaus eine sehr geringe Schärfentiefe. Um diese Linsenfelder dennoch zur Erkennung von 3D-Topografien im Bereich von Millimetern und Zentimetern einsetzen zu können, ist es erforderlich, daß das GRIN-Feld parallel zur Beleuchtungsebene angeordnet ist, wodurch ein nahezu konstanter Abstand von der Linie zu dem GRIN-Feld erzielt wird. Nur mit dieser Anordnung des GRIN-Feldes ist es möglich, den Höhenverlauf des Prägebildes auf dem Bildempfänger abzubilden.

Die Daten- oder Bildverarbeitung kann sowohl durch rotations- und translationsinvariante Auswertealgorithmen erfolgen als auch in Abhängigkeit von Position und Lage der Münze, da diese durch die Aufnahme bekannt ist. Da jedoch das Profil der Münze über den Gesamtwinkel von 360° bekannt ist, ist es ohne weiteres möglich, durch entsprechende Verarbeitung in einem Rechner die Drehlage zu erfassen und einen entsprechenden Vergleich mit einem Sollprofil vorzunehmen. In diesem Fall kann mit Hilfe des erfindungsgemäßen Verfahrens eine Reihe von materialunabhängigen Größen von Münzen ermittelt werden, wie Durchmesser, Profiltiefe, Randhöhe, Prägebild, mikroskopische Oberflächenstrukturen usw. Diese Informationen können einzeln oder kombiniert oder in Teilen zur Münzerkennung verwendet werden.

Die Münzen haben einen Durchmesser bis zu einigen cm. Die Prägungen sind meist nur maximal einige 1/10 mm tief. Um eine gute Auflösung bei der Prägebilderkennung zu erhalten, ist es daher vorteilhaft, wenn eine Vergrößerung in Profilrichtung, d. h. in Profiltiefe bzw. -höhe, erfolgt. Soll eine Münze von einem Bildempfänger in ihrer vollen Breite erfaßt werden, kann die gesamte Münzbreite auf Größe des Bildempfängers abgebildet werden. Diese Grundabbildung kann durch eine Verkleinerung oder eine Vergrößerung erfolgen. Da eine Münze von dem Bildempfänger in ihrer vollen Breite erfaßt werden soll, ist vorzuziehen, wenn eine Verkleinerung des Bildes in Richtung Münzbreite erfolgt. Um eine hinreichende Auflösung zu erreichen, ergeben sich zusätzlich mehrere Möglichkeiten der Profilabbildung. Zum einen kann das Profil durch die schräg einfallende Linie um einen Faktor bis hin zu sin(α)⁻¹ vergrößert werden, wobei α der Winkel zwischen Beleuchtungsebene und Münzebene ist. Ferner kann dem Bildempfänger ein anamorphotisches Objektiv vorgeschaltet werden, das unterschiedliche Abbildungsverhältnisse in den Azimuten ermöglicht. Drittens kann eine bessere Auflösung mit einer hohen Pixeldichte erreicht werden, etwa in einem CCD oder CMOS-Array. Viertens ist es denkbar, Teile der Münze auf der Bildebene gleichzeitig bzw. zeitversetzt, getrennt bzw. zusammen abzubilden, wodurch die Vergrößerung entsprechend der vergrößerten Grundabbildung zunimmt. Schließlich ist eine EDV-gestützte Vergrößerung möglich.

Die Erfindung wird nachfolgend anhand von Zeichnungen erläutert.
- Fig. 1: zeigt schematisch eine Anordnung zur Prägebilderkennung mit unterschiedlicher Auflösung am Bildempfänger.
- Fig. 2: zeigt eine Möglichkeit zur Erzeugung einer Lichtlinie auf dem Prägebild einer Münze.
- Fig. 3: zeigt eine nach dem erfindungsgemäßen Verfahren aufgenommene Profillinie einer 1 DM-Münze.
- Fign. 4a bis c: zeigen schematische Ansichten zur Erzeugung einer Beleuchtung mittels LED.
- Fig. 5: zeigt den Aufbau einer zylindrischen GRIN-Linse.
- Fig. 6: zeigt die Anordnung eines GRIN-Linsenfeldes zur Prägebilderkennung.

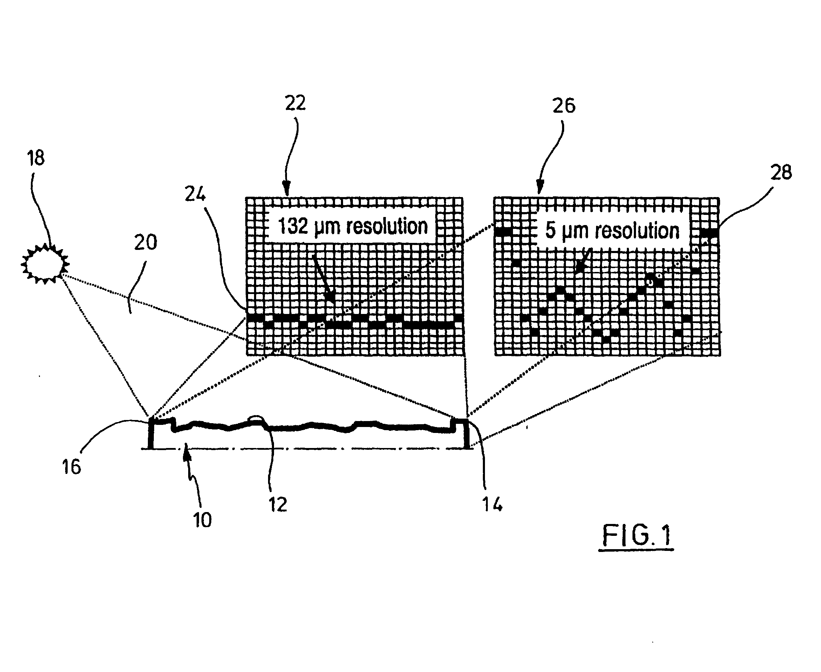

In Fig. 1 ist ein Schnitt durch eine Münze 10 dargestellt, beispielsweise einer 1 DM-Münze. Ein durch die Prägung erzeugtes Profil ist bei 12 deutlich erkennbar. Außerdem ist ein Münzrand bei 14 bzw. 16 erkennbar. In Fig. 1 ist nur die eine Hälfte der Münze 10 dargestellt. Die andere ist aus Vereinfachungsgründen fortgelassen.

Mit Hilfe einer Lichtquelle 18, beispielsweise eines Lasers, wird ein Linienstrahl in einer Ebene 20 erzeugt. Die auf die Prägefläche der Münze 10 projizierte Linie kann stationär sein, so daß bei einer Bewegung der Münze beispielsweise in oder aus der Zeichenebene hinaus die gesamte Prägefläche von der projizierten Lichtlinie überfahren wird.

Mit Hilfe eines Bildempfängers 22, beispielsweise eines CCD-Arrays oder eines CMOS-Arrays, wird die Lichtlinie abgetastet. Es wird der Verlauf der Lichtlinie und damit das Profil der Münze entlang der Linie ermittelt. Dieser Verlauf ist in dicker schwarzer gebrochener Linie 24 zu erkennen. Da besondere Maßnahmen nicht ergriffen sind, um die Auflösung zu verbessern, sind die Hübe im Verlauf der Profillinie relativ klein. Es handelt sich z. B. um eine Auflösung von 132 µm. In dem Array 26, das anstelle des Arrays 22 verwendet werden kann und dem eine entsprechende Optik vorgeschaltet ist, läßt sich eine weitaus bessere Auflösung, beispielsweise von unter 5 µm realisieren. Diese Auflösung kann ebenfalls erreicht werden, indem ein Array 22 mit einer höheren Pixeldichte verwendet wird. Bei der verwendeten Optik kann es sich beispielsweise um eine anamorphotische Optik handeln. Entsprechend ist der Verlauf 28 der Profillinie. Diese läßt sich zu Diskriminierungszwecken naturgemäß besser auswerten als etwa die Profillinie 24 im Array 22.

Um eine ausreichende Bildauflösung zu erzielen, ist es notwendig, in kurzer Zeit sehr viele Aufnahmen zu machen. Das bedeutet, daß die Kamera mit sehr kurzen Aufnahmezeiten (Integrationszeiten) arbeiten muß. Des weiteren ist zu beachten, daß hierbei sowohl das diffus gestreute Licht als auch das reflektierte Licht aufgenommen werden kann.

Um ein ausreichendes Signal-Rauschverhältnis zu haben, ist es notwendig, starke Lichtquellen zu verwenden. Hierbei bietet sich zum Beispiel der Einsatz von Laserlichtquellen an.

Aufgrund der metallischen Eigenschaften von Münzen, den Profileigenschaften und der Oberflächenbeschaffenheit kann es immer wieder zu direkten Reflektionen in Richtung Bildsensor kommen. Dadurch wird der aufnehmende Bildsensor geblendet. Ein weiterer Grund für eine Blendung liegt in dem Auftreten von sogenannten Speckles. Diese ergeben sich bei kohärenter, monochromatischer Beleuchtung als konstruktive Interferenz des reflektierten Lichts.

Bei herkömmlichen CCD-Kameras (Charge Coupled Devices) kommt es im Falle einer Blendung dazu, daß die Signale eines Sensorelements sich mit den Signalen benachbarter Sensorelemente überlagern. Dieser Effekt wird als Blooming bezeichnet und ist für die Prägebilderkennung nachteilig. Bevorzugt werden daher CMOS-Bildsensoren eingesetzt, bei denen eine physikalische Entkoppelung der lichtempfindlichen Sensorelemente vorliegt, so daß direkte Beleuchtung und Speckles sich nicht nachteilig auswirken.

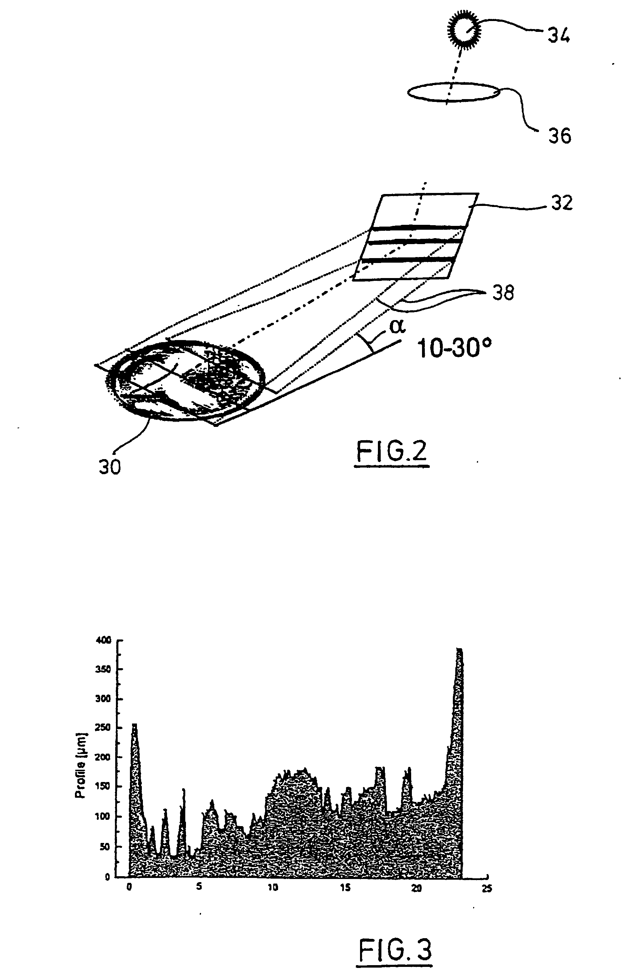

In Fig. 3 ist das Profil einer 1 DM-Münze wiedergegeben, und zwar deren Adlerseite. Die Profillinie entspricht dem Profil durch den Durchmesser der Münze.

In Fig. 2 ist zu erkennen, wie eine Münze 30 über eine Chrommaske typischerweise in einer Scheimpflugkonfiguration linienförmig beleuchtet wird. Zwischen der Maske 32 und einer Lichtquelle 34, beispielsweise einer LED, ist außerdem eine geeignete Optik 36 angeordnet. Die Lichtebenen 38 haben zur Erstreckung der Prägebildfläche einen Winkel größer als 10°, bevorzugt zwischen 10° und 30°.

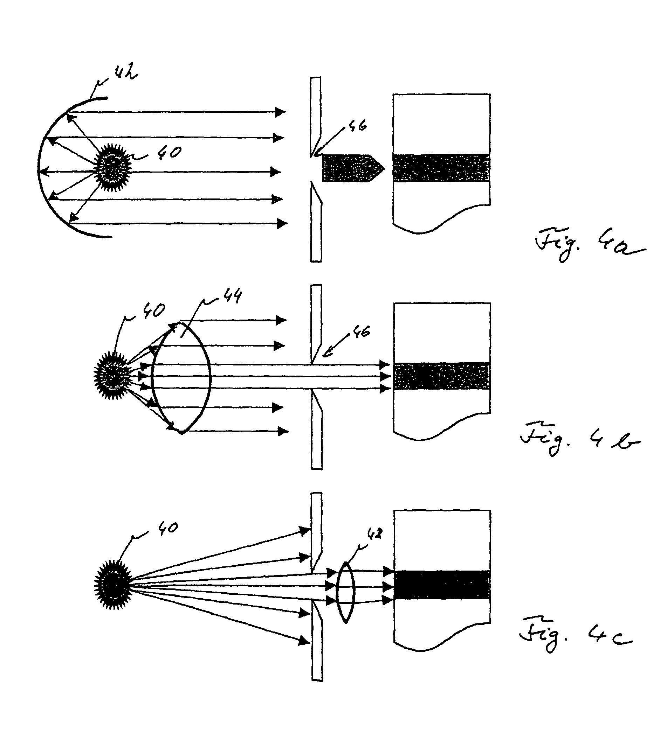

Im Fall der Verwendung einer Laserlichtquelle ist eine möglichst breitbandige Lichtquelle zu verwenden, um den Speckle-Effekt zu minimieren. Bei Verwendung einer LED tritt dieser Effekt naturgemäß nicht auf. Für die Verwendung von LEDs sind beispielsweise die in Fig. 4 dargestellten Anordnungen zur Erzeugung einer scharfen Linie möglich. Um einen möglichst hohen Hell-Dunkel-Kontrast zu erzielen, wird das Licht einer Leuchtdiode 40 über einen Spiegel 42 oder eine Linse 44 gebündelt und durch einen Spalt 46 auf die Münze projiziert. Ebenfalls ist es möglich, das Licht einer Leuchtdiode 40 erst nach dem Spalt 46 mit einer Linse 48 zu bündeln.

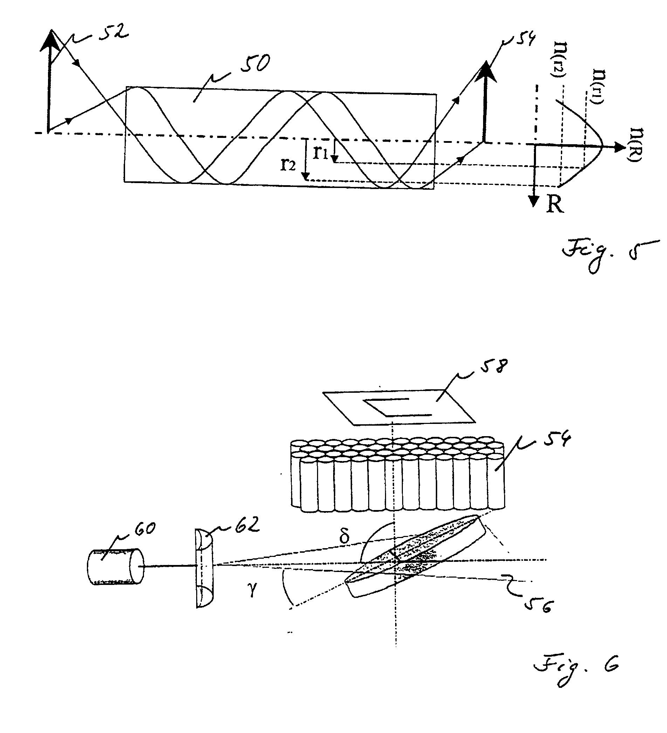

Fig. 5 zeigt den schematischen Aufbau eines Gradienten-Index-Linsenarrays (GRIN-Lens). Die zylindrische Linse 50 besitzt in radialer Richtung einen variablen Brechungsindex n_{R} derart, daß ein abzubildender Gegenstand 52 als ein reelles Bild 54 abgebildet wird. Die Abbildung erfolgt hierbei im Maßstab 1:1.

Fig. 6 zeigt eine bevorzugte Anwendung eines GRIN-Linsenfeldes 54, die parallel zur Beleuchtungsebene 56 und zur Bildempfängerebene 58 angeordnet ist. Der mit δ bezeichnete Winkel zwischen der Beleuchtungsebene 56 und der Normalen des GRIN-Feldes 54 beträgt 90°. Die Münze ist mit ihrer Prägebild- gegenüber der Beleuchtungsebene um einen Winkel γ zwischen 0° und 90° geneigt. Als Lichtquelle ist in Fig. 6 ein Laser 60 dargestellt, dessen Laserstrahl über eine Linienoptik 62 zu einer Beleuchtungsebene 56 aufgeweitet wird.

## Patentansprüche

1. Verfahren zur Erkennung der räumlichen Konfiguration von Münzen in einem Münzautomaten mit den folgenden Schritten:
- eine Lichtquelle projiziert mindestens ein zweidimensionales Lichtmuster auf die Prägefläche einer zu erkennenden Münze, wobei das Lichtmuster aus Lichtlinien besteht,
- die Lichtquelle trifft unter einem Winkel größer als 0° und kleiner als 90° in bezug auf die Erstreckung der Prägefläche auf die Prägefläche,
- die Münze wird relativ zu der stationären Lichtquelle bewegt derart, daß sukzessive ein Teil oder die gesamte Prägefläche der Münze beleuchtet wird,
- die beleuchtete Münzfläche wird mit einer Optik auf einen Bildempfänger abgebildet,
- der Verlauf des Lichtmusters wird während des Vorbeibewegens der Münze an der Lichtquelle durch den Bildempfänger aufgezeichnet,
- die ermittelten Bilddaten werden mit vorgegebenen Bilddaten zur Erzeugung eines Echt- oder Falschsignals durch eine Daten- und Bildverarbeitung verglichen.

2. Verfahren nach Anspruch 1, **dadurch gekennzeichnet, daß** der Verlauf des Lichtmusters durch ein Linsenfeld abgebildet wird, das im wesentlichen parallel zur Beleuchtungsebene angeordnet ist.

3. Verfahren nach Anspruch 2, **dadurch gekennzeichnet, daß** als Linsenfeld ein 1:1 abbildendes GRIN-Linsenfeld vorgesehen ist.

4. Verfahren nach einem der Ansprüche 1 bis 3, **dadurch gekennzeichnet, daß** das Lichtmuster mit einem Laser und einer Linienoptik erzeugt wird.

5. Verfahren nach einem der Ansprüche 1 bis 3, **dadurch gekennzeichnet, daß** das Lichtmuster mit einer LED und einer Maske erzeugt wird.

6. Verfahren nach einem der Ansprüche 1 bis 5, **dadurch gekennzeichnet, daß** der Bildempfänger eine Digitalkamera, einen CCD-Sensor oder einen CMOS-Sensor bzw. -Chip verwendet.

7. Verfahren nach einem der Ansprüche 1 bis 7, **dadurch gekennzeichnet, daß** dem Bildempfänger eine abbildende Optik vorgeschaltet ist zwecks Vergrößerung des Profilbildes in bezug auf die Profilhöhe bzw. -tiefe.

8. Verfahren nach Anspruch 7, **dadurch gekennzeichnet daß** als abbildende Optik eine anamorphotische Optik vorgeschen ist.

9. Verfahren nach einem der Ansprüche 1 bis 8, **dadurch gekennzeichnet, daß** in der Daten- und Bildverarbeitung eine Vergrößerung der Profilhöhe bzw. Profiltiefe und/oder eine Verkleinerung der Profillänge vorgenommen wird.

## Claims

1. A method for the identification of the spatial configuration of coins in an automatic coin machine, comprising the following steps:
- A light source projects at least one two-dimensional light pattern onto the minted surface of a coin requiring identification wherein the light pattern consists of light lines,
- The light source is incident onto the minted surface under an angle which is more than 0° and less than 90° in relation to the extent of the minted surface,
- The coin is moved relative to the stationary light source such that some part or the entire minted surface of the coin is successively illuminated,
- The illuminated coin surface is imaged on an image receptor by means of an optical device,
- The course of the light pattern is recorded by the image receptor while the coin is being moved past the light source,
- The image data determined is compared to predetermined image data to generate a real or alias signal by a data and image processing device.

2. The method according to claim 1, **characterised in that** the course of the light pattern is imaged by am array of lenses which is disposed substantially in parallel with the plane of illumination.

3. The method according to claim 2, **characterised in that** a 1:1 imaging GRIN array of lenses is provided as an array of lenses.

4. The method according to any one of claims 1 to 3, **characterised in that** the light pattern is generated by a laser and a line optical device.

5. The method according to any one of claims 1 to 3, **characterised in that** the light pattern is generated by a LED and a mask.

6. The method according to any one of claims 1 to 5, **characterised in that** the light receptor uses a digital camera, a CCD sensor or a CMOS sensor or chip.

7. The method according to any one of claims 1 to 7, **characterised in that** the light receptor is preceded by an imaging optical device for the purpose of enlarging the profile graph in relation to the height or depth of profile.

8. The method according to claim 7, **characterised in that** an anamorphic optical device is provided as an imaging optical device.

9. The method according to any one of claims 1 to 8, **characterised in that** an enlargement of the height of profile or depth of profile and/or a reduction of the length of profile are made in the data and image processing device.

## Revendications

1. Procédé de reconnaissance de la configuration spatiale de pièces de monnaies dans un distributeur automatique avec les étapes suivantes :
- une source de lumière projette au moins un motif lumineux bidimensionnel sur la surface estampée d'une monnaie à reconnaître, moyennant quoi le motif lumineux est constitué de lignes lumineuses,
- la source de lumière rencontre, avec un angle supérieur à 0° et inférieur à 90°, la surface estampée,
- la pièce de monnaie est déplacée par rapport à la source de lumière stationnaire de façon à ce que une partie ou l' ensemble de la surface estampée de la pièce de monnaie soit éclairée successivement,
- la surface éclairée de la pièce de monnaie est reproduite à l'aide d'une optique sur un récepteur d'image,
- le tracé du motif lumineux est détecté par le récepteur d'image pendant le déplacement de la pièce de monnaie devant la source de lumière,
- les données graphiques obtenues sont comparées à des données graphiques prédéterminées pour la production d'un signal vrai ou faux à l'aide d'un traitement des données ou d'un traitement d'image

2. Procédé selon la revendication 1, **caractérisé en ce que** le tracé du motif lumineux est reproduit par un réseau de lentilles globalement parallèle au plan d'éclairage.

3. Procédé selon la revendication 2, **caractérisé en ce que**, comme réseau de lentilles, un réseau de lentilles de reproduction GRIN 1:1 est utilisé.

4. Procédé selon l'une des revendications 1 à 3, **caractérisé en ce que** le motif lumineux est produit à l'aide d'un laser et d'une optique en ligne.

5. Procédé selon l'une des revendications 1 à 3, **caractérisé en ce que** le motif lumineux est produit à l'aide d'une LED et d'un masque.

6. Procédé selon l'une des revendications 1 à 5, **caractérisé en ce que** le récepteur d'image est un appareil photo numérique, un capteur CCD ou un capteur ou une puce CMOS.

7. Procédé selon l'une des revendications 1 à 6, **caractérisé en ce qu'**en amont du récepteur d'image est branchée une optique de reproduction pour l'agrandissement de l'image du profil, en ce qui concerne la hauteur ou la profondeur du profil.

8. Procédé selon la revendication 7, **caractérisé en ce que** l'optique de reproduction est une optique anamorphique.

9. Procédé selon l'une des revendications 1 à 8, **caractérisé en ce que**, dans le traitement des données ou de l'image, un agrandissement de la hauteur ou de la profondeur du profil et/ou une réduction de la longueur du profil est réalisée.
